(19) Europäisches Patentamt

European Patent Office

Office européen des brevets

(11) **EP 0 869 147 B1**

(12) **EUROPÄISCHE PATENTSCHRIFT**

(45) Veröffentlichungstag und Bekanntmachung des Hinweises auf die Patenterteilung:
**05.03.2003 Patentblatt 2003/10**

(51) Int Cl.[7]: **C08L 25/12**, C08L 55/02, C08K 5/00 // (C08L25/12, 55:02)

(21) Anmeldenummer: **98104998.4**

(22) Anmeldetag: **19.03.1998**

(54) **Pfropfpolymerisat-Formmassen mit reduzierter Belagsbildung**

Grafted polymer moulding compositons with reduced buildup

Compositions à mouler à base de polymères greffés à basse accumulation de dépôt

(84) Benannte Vertragsstaaten:
**BE DE ES FR GB IT NL**

(30) Priorität: **01.04.1997 DE 19713509**

(43) Veröffentlichungstag der Anmeldung:
**07.10.1998 Patentblatt 1998/41**

(73) Patentinhaber: **BAYER AG**
**51368 Leverkusen (DE)**

(72) Erfinder:
• **Sarabi, Bahman, Dr.**
**47803 Krefeld (DE)**
• **Eichenauer, Herbert, Dr.**
**41539 Dormagen (DE)**
• **Leitz, Edgar, Dr.**
**41541 Dormagen (DE)**
• **Alberts, Heinrich, Dr.**
**51519 Odenthal (DE)**
• **Eckel, Thomas, Dr.**
**41540 Dormagen (DE)**
• **Wittman, Dieter, Dr.**
**51375 Leverkusen (DE)**

(56) Entgegenhaltungen:
**DD-A- 279 891**

• **CHEMICAL ABSTRACTS, vol. 126, no. 9, 3.März 1997 Columbus, Ohio, US; abstract no. 118931, XP002070921 & JP 08 311 127 A (JAPAN SYNTHETIC RUBBER CO LTD) 26.November 1996**
• **CHEMICAL ABSTRACTS, vol. 90, no. 18, 30.April 1979 Columbus, Ohio, US; abstract no. 138672, XP002070922 & JP 53 145 859 A (TORAY INDUSTRIES, INC., JAPAN) 19.Dezember 1978**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft thermoplastische Pfropfpolymerisat-Formmassen für Hochglanz-Anwendungen mit verminderter Tendenz der Additive zum Ausschwitzen aus der Thermoplastmasse bei Verarbeitung und reduziertem Belagsaufbau im Werkzeug.

Pfropfpolymerisat-Formmassen, insbesondere ABS-Formmassen sind Zweiphasenkunststoffe aus

I. einem thermoplastischen Copolymerisat aus Styrol und Acrylnitril, in dem das Styrol ganz oder teilweise durch andere Monomere wie z.B. α-Methylstyrol oder Methylmethacrylat ersetzt werden kann; dieses Copolymerisat, auch als SAN-Harz oder Matrix-Harz bezeichnet, bildet die äußere Phase;

II. mindestens einem Pfropfpolymerisat vom ABS-Typ, welches hergestellt worden ist durch Pfropfreaktion eines oder mehrerer der unter I. genannten Monomeren auf Butadien-Homo- oder Copolymerisat ("Pfropfgrundlage"). Dieses Pfropfpolymerisat ("Elastomerphase" oder "Pfropfkautschuk") bildet die disperse Phase im Matrixharz.

Ein wichtiger Punkt bei der Herstellung von hochglänzenden Formteilen aus diesen Formmassen ist die zunehmende Forderung des Marktes nach Belagsfreiheit im Werkzeug (z.B. Möglichkeit der vollautomatischen Kunststoffverarbeitung zu Formteilen durch Spritzgießautomaten) sowie die bei Hochglanz-Anwendungen notwendige sichere Vermeidung von Flecken auf den Formteilen durch austretende flüssige bzw. niederviskose Bestandteile. Ebenso dürfen sich bei genarbten Werkzeugen keine Beläge in der Narbung festsetzen und zu einer ungenügenden Abbildung auf den Formteilen führen. Andererseits müssen die ABS-Formmassen optimale Eigenschaften, insbesondere im Hinblick auf thermoplastische Verarbeitbarkeit und Zähigkeit, aufweisen, was oft nur durch Zusatz spezieller in vielen Fällen flüssiger Additive sichergestellt werden kann.

Es bestand daher die Aufgabe, Pfropfpolymerisat-Formmassen, vorzugsweise ABS-Formmassen für den Hochglanz-Bereich mit sehr guten verarbeitungstechnischen Eigenschaften ohne das Auftreten einer Belagsbildung bei der thermoplastischen Verarbeitung bereitzustellen.

Es wurde nun gefunden, daß die beschriebenen Anforderungen erfüllt werden, wenn die Formmassen aus speziell zusammengesetzen Komponenten aufgebaut sind und bestimmte Randbedingungen eingehalten werden.

Gegenstand der Erfindung sind thermoplastische Formmassen vom ABS-Typ enthaltend

A) 5 bis 95 Gew.-%, bevorzugt 10 bis 90 Gew.-% und besonders bevorzugt 20 bis 75 Gew.-%, mindestens eines thermoplastischen Homo-, Co- oder Terpolymerisats von Styrol, α-Methylstyrol, Acrylnitril, N-substituiertem Maleinimid oder Mischungen daraus,

B) 5 bis 95 Gew.-%, bevorzugt 10 bis 90 Gew.-% und besonders bevorzugt 25 bis 80 Gew.-% mindestens eines Pfropfpolymerisats von

B.1) 5 bis 90 Gew.-Teilen, vorzugsweise 30 bis 80 Gew.-Teilen, Styrol, α-Methylstyrol, Acrylnitril, N-substituiertem Maleinimid oder Mischungen daraus auf

B.2) 95 bis 10 Gew.-Teile, vorzugsweise 70 bis 20 Gew.-Teile, eines Kautschuks mit einer Glasübergangstemperatur $\leq 0°C$ und

C) 1 bis 10 Gew.-Teile, vorzugsweise 2 bis 7,5 Gew.-Teile und besonders bevorzugt 3 bis 5 Gew.-Teile (jeweils pro 100 Gew.-Teile A+B) mindestens eines Additivs ausgewählt aus der Gruppe Gleitmittel, Antistatikum, Entformungsmittel oder Mischungen daraus,

dadurch gekennzeichnet, daß die Komponente A) durch Masse-, Lösungs- oder Suspensionspolymerisation hergestellt wird und einen Oligomerengehalt $\leq 1$ Gew.-%, vorzugsweise $\leq 0,75$ Gew.-% und besonders bevorzugt $\leq 0,5$ Gew.-% aufweist, Komponente B) durch Emulsionspolymerisation synthetisiert wird und der Gesamtoligomerengehalt (Dimere, Trimere, Tetramere) der Formmasse $\leq 0,8$ Gew.-%, vorzugsweise $\leq 0,7$ Gew.-% und besonders bevorzugt $\leq 0,6$ Gew.-% beträgt und das Verhältnis Molekulargewicht des Additivs zu Menge des Additivs in der Formmasse (in Gew.-%) einen Wert von 150, vorzugsweise 200 und besonders bevorzugt 250 nicht unterschreitet, wobei die Kautschuke im Pfropfpolymerisat in Form wenigstens partiell vernetzter Teilchen eines mittleren Teildurchmessers ($d_{50}$) von 0,05 bis 0,60 μm vorliegt.

Erfindungsgemäß geeignete Polymerisate A) sind harzartige, thermoplastische und kautschukfreie Produkte aus Styrol, α-Methylstyrol, Acrylnitril, N-substituiertem Maleinimid oder Mischungen daraus mit einem Oligomerengehalt von $\leq 1$Gew.-%, vorzugsweise $\leq 0,75$ Gew.-% und besonders bevorzugt $\leq 0,5$Gew.-%, die durch Masse-, Lösungs- oder Suspensionspolymerisation und nicht durch Emulsionspolymerisation hergestellt werden.

Bevorzugte Polymerisate sind solche aus Styrol/Acrylnitril-Gemischen, α-Methylstyrol/Acrylnitril-Gemischen, Styrol/α-Methylstyrol/Acrylnitril-Gemischen, Styrol/N-Phenylmaleinimid-Gemischen, Styrol/Acrylnitril/N-Phenylmaleinimid-Gemischen.

Besonders bevorzugte Polymerisate sind Styrol/Acrylnitril-Copolymerisate und α-Methylstyrol/Acrylnitril-Copolymerisate.

Derartige Polymerharze sind bekannt. Dabei muß die Herstellung dieser Harze so erfolgen, daß der geforderte Oligomerengehalt nicht überschritten wird. Üblicherweise entstehen beim technisch am häufigsten benutzten Verfahren der thermischen Lösungs- oder Massepolymerisation Oligomere aus vorzugsweise 2 bis 4 Monomereinheiten (vgl. hierzu K. Kirchner und H. Schlapkohl in Makromol. Chem. 177 (1976), S. 2031-2042: The Formation of Oligomers in the Thermal Copolymerisation of the Styrene/Acrylonitrile-System), zur Vermeidung einer solchen Oligomerenbildung müssen spezielle Reaktionsbedingungen (Einsatz bestimmter Initiatoren) wie beispielsweise Di-tert.-butyl-peroxid, 1,1-Bis(t-butylperoxy)cyclohexan, Benzoylperoxid oder Azo-bis-isobutyronitril angewandt werden. Solche Prozesse sind bekannt (vgl. z.B. US-PS 4 068 064).

Die Herstellung der erfindungsgemäß geeigneten Polymerisate A) erfolgt demzufolge bevorzugt durch Masse-, Lösungs- oder Suspensionspolymerisation unter Verwendung organischer Radikalinitiatoren und Einhaltung sonstiger gegebenenfalls zur Erzielung der niedrigen Oligomerengehalte notwendiger Reaktionsbedingungen, wie sie z. B. in US-PS 4 068 064 beschrieben sind.

Eine prinzipielle weitere Möglichkeit zur Herstellung der erfindungsgemäß geeigneten Polymerisate A) besteht darin, oligomerenhaltige Harze durch Entgasungsschritte (z.B. in der Schmelze) auf den geforderten Oligomerengehalt zu bringen; dieses Verfahren ist allerdings relativ aufwendig.

Die Messung der Oligomeren kann durch gängige Methoden erfolgen; am gebräuchlichsten ist die Ermittlung durch Gaschromatographie oder durch Gelpermeationschromatographie.

Die Harzkomponenten A) besitzen vorzugsweise mittlere Molekulargewichte $\overline{M}_w$ von 20 000 bis 200 000 bzw. Grenzviskositäten [η] von 20 bis 110 ml/g (gemessen in Dimethylformamid bei 25°C).

Zur Herstellung der Pfropfpolymerisate B) geeignete Kautschuke sind insbesondere Polybutadien, Butadien/Styrol-Copolymerisate, Butadien/Acrylnitril-Copolymerisate, Polyisopren oder Alkylacrylatkautschuke auf der Basis von $C_1$-$C_8$-Alkylacrylaten, insbesondere Ethyl-, Butyl- und Ethylhexylacrylat.

Die Alkylacrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Sie können auch kleinere Mengen, vorzugsweise bis zu 5 Gew.-% (bezogen auf Kautschukgewicht) vernetzend wirkender, ethylenisch ungesättigter Monomerer einpolymerisiert enthalten. Vernetzer sind z.B. Alkylendioldiacrylate, Alkylendioldimethacrylate, Polyesterdiacrylate, und Polyesterdimethacrylate, Divinylbenzol, Trivinylbenzol, Triallylcyanurat, Allylacrylat und Allylmethacrylat, Butadien oder Isopren.

Acrylatkautschuke als Pfropfgrundlage können auch einen vernetzten Dienkautschuk aus einem oder mehreren konjugierten Dienen, wie Polybutadien, oder ein Copolymerisat eines konjugierten Diens mit einem ethylenisch ungesättigten Monomer wie Styrol und/oder Acrylnitril, als Kern enthalten.

Bevorzugte Kautschuke zur Herstellung der Pfropfpolymerisate B) sind Dien- und Alkylacrylatkautschuke. Besonders bevorzugt sind Polybutadien und Copolymerisate aus Butadien und Styrol sowie aus Butadien und Acrylnitril.

Die Kautschuke liegen im Pfropfpolymerisat B) in Form wenigstens partiell vernetzter Teilchen eines mittleren Teilchendurchmessers ($d_{50}$) von 0,05 bis 0,60 μm, bevorzugt von 0,08 bis 0,50 μm und besonders bevorzugt 0,1 bis 0,45 μm vor.

Der mittlere Teilchendurchmesser $d_{50}$ wird ermittelt durch Ultrazentrifugenmessungen nach W. Scholtan et al., Kolloid-Z. u. Z. Polymere 250 (1972), 782-796.

Die Pfropfpolymerisate B) werden durch radikalische Emulsionspfropfpolymerisation der Monomeren B.1) in Gegenwart der in Emulsionsform vorliegenden zu pfropfenden Kautschuke B.2) hergestellt.

Als erfindungsgemäß einzusetzende Additive C) kommen Gleitmittel, Antistatika und Entformungsmittel in Frage; diese Additive spielen bei der Erzielung guter Oberflächenqualitäten eine wichtige Rolle. Dabei werden diese Additive in Mengen von 1 bis 10 Gew.-Teilen, vorzugsweise 2 bis 7,5 Gew.-Teilen und besonders bevorzugt 3 bis 5 Gew.-Teilen (jeweils bezogen auf 100 Gew.-Teile A+B) eingesetzt.

Beispiele für Gleitmittel sind Kohlenwasserstoffe (z.B. Paraffinöle, Polyethylenwachse), Alkohole (z.B. Stearylalkohol), Carbonsäuren (z.B. Laurinsäure, Palmitinsäure, Stearinsäure), Carbonsäureamide (Stearinsäureamid, Ethylendiaminbisstearylamid), Carbonsäureester (z.B. n-Butylstearat, Stearylstearat, Glycerinmonostearat, Glycerintristearat, Pentaerythrittetrastearat); bevorzugte Gleitmittel sind Carbonsäureamide und Carbonsäureester.

Beispiele für Antistatika sind kationaktive Verbindungen (z.B. quartäre Ammonium-, Phosphonium- oder Sulfoniumsalze), anionaktive Verbindungen (z.B. Alkylsulfonate, Alkylsulfate, Alkylphosphate, Carboxylate in Form von Alkali- oder Erdalkalimetallsalzen), nichtionogene Verbindungen (z.B. Polyethylenglykolester, Polyethylenglykolether, Fettsäureester, ethoxylierte Fettamine); bevorzugte Antistatika sind nichtionogene Verbindungen.

Beispiele für Entformungsmittel sind Calciumstearat, Zinkstearat, Magnesiumstearat; bevorzugtes Entformungsmittel ist Magnesiumstearat.

Dabei darf zur Sicherstellung einer ausreichenden Reduzierung der Belagsbildung das Verhältnis (Molekulargewicht des zugesetzten Additivs) : (Menge des zugesetzten Additivs in der Formmasse in Gew.-%) einen Wert von 150, vorzugsweise 200 und besonders bevorzugt 250 nicht unterschreiten.

Neben den genannten Additiven können die erfindungsgemäßen Formmassen auch Stabilisatoren, Pigmente und Füllstoffe enthalten.

Die erfindungsgemäßen Mischungen, werden hergestellt, indem man die Bestandteile in bekannter Weise simultan oder sukzessive bei Raumtemperatur oder bei höherer Temperatur vermischt und danach bei Temperaturen von 150°C bis 300°C in gebräuchlichen Aggregaten wie Innenknetern, Extrudern oder Doppelwellenschnecken schmelzcompoundiert oder schmelzextrudiert.

Die Formmassen der Erfindung können zur Herstellung von Formkörpern jeder Art verwendet werden, wobei übliche Herstellungsweisen benutzt werden können, insbesondere können Formkörper durch Spritzgießen hergestellt werden.

Eine solche Verwendung der erfindungsgemäßen Formmassen ist ein weiterer Gegenstand des Erfindung.

Eine weitere Form der Verarbeitung der erfindungsgemäßen Formmassen ist die Herstellung von Formteilen durch Tiefziehen aus vorher nach bekannten Verfahren hergestellten Platten oder Folien.

Ein weiterer Gegenstand der Erfindung ist die Verwendung der erfindungsgemäßen Formmassen zur Herstellung von Hochglanzteilen.

### **Beispiele**

Eingesetzte Komponenten

A1: Styrol/Acrylnitril = 72:28-Copolymerisat mit einem mittleren Molekulargewicht $\overline{M}_w$ von 88 000, hergestellt nach Suspensionspolymerisation mit Ditert.-butylperoxid bei 140°C.
Oligomerengehalt: 0,35 Gew.-%

A2: Styrol/Acrylnitril = 72:28-Copolymerisat mit einem mittleren Molekulargewicht $\overline{M}_w$ von 81 000, hergestellt nach peroxidischer Massepolymerisation mit Di-tert.-butylperoxid bei 150°C.
Oligomerengehalt: 0,60 Gew.-%

AV (Vergleichsmaterial):
Styrol/Acrylnitril = 72:28-Copolymerisat mit einem mittleren Molekulargewicht $\overline{M}_w$ von 85 000, hergestellt nach thermischer Massepolymerisation bei 165°C.
Oligomerengehalt: 1,83 Gew.-%

B1: Pfropfpolymerisat erhalten durch Kaliumpersulfat-initiierte Emulsionspolymerisation von 45 Gew.-Teilen eines Monomerengemisches aus Styrol und Acrylnitril (Gew.-Verhältnis 73:27) in Gegenwart von 55 Gew.-Teilen (gerechnet als Feststoff) eines Polybutadienlatex mit einer mittleren Teilchengroße ($d_{50}$) von ca. 400 nm, Koagulation mit einem Magnesiumsulfat/Essigsäure-Gemisch und Trocknen des Polymerpulvers,

B1: Pfropfpolymerisat erhalten durch Kaliumpersulfat-initiierte Emulsionspolymerisation von 45 Gew.-Teilen eines Monomerengemisches aus Styrol und Acrylnitril (Gew.-Verhältnis 73:27) in Gegenwart von 55 Gew.-Teilen (gerechnet als Feststoff) eines Polybutadienlatex mit einer mittleren Teilchengröße ($d_{50}$) von ca. 130 nm, Koagulation mit einem Magnesiumsulfat/Essigsäure-Gemisch und Trocknen des Polymerpulvers.

C1: Ethylendiminbisstearylamid (Henkel KG, Düsseldorf, Deutschland)

C2: n-Butylstearat (Merck AG, Darmstadt, Deutschland)

C3: Magnesiumstearat (Bärlocher, München, Deutschland)

Die oben beschriebenen Komponenten werden in den in Tabelle 1 angegebenen Mengen in einem Innenkneter bei ca. 190°C bis 200°C homogen vermischt und anschließend in Granulatform überführt.

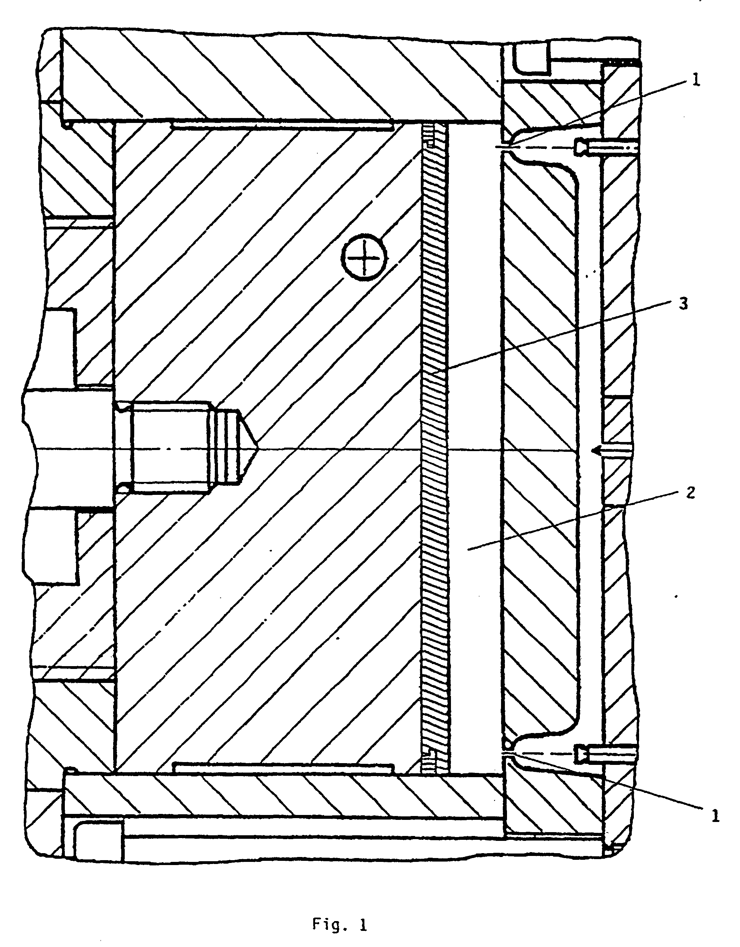

Dieses Material wird unter Verwendung eines in Figur 1 beschriebenen Heißkanalwerkzeugs unter den nachstehenden Bedingungen verarbeitet.

Nach 350 Schuß wird die Scheibe entnommen und die Belagsmenge ermittelt (siehe Tabelle 1, letzte Spalte).

Aus den Ergebnissen ist ersichtlich, daß nur die erfindungsgemäßen Formmassen zu sehr geringer Belagsbildung führen.

**Verarbeitungsbedingungen:**

| Spritzgießmaschine | Klöckner-Ferromatik-FM 60, vollgeregelt | |
| | Schneckendurchmesser | 25 mm |
| | Schließkraft | 600 kN |
| | max. Schußgewicht | 45 g |
| | max. Einspritzdruck | 3000 bar |
| Werkzeug | Rundscheibe mit 118 mm Durchmesser Dicke, 2 bis 4 mm, bevorzugt 2 mm, mit Heißkanal (Figur 1), | |
| | 6 auswechselbare Begrenzungsscheiben, | |
| | 2-fach Punktanguß (je 0,1 bis 2 mm, vorzugsweise je 0,8 mm Durchmesser) mit Zusammenfließnaht und Luftauswerfer, | |
| | 1,5 mm Wandstärke (variabel), | |
| | Schußgewicht 20 g (Platte 15 g, Anguß 5 g) | |
| Spritzgießparameter | Massetemperatur | 240°C |
| | Werkzeugtemperatur | 28°C |
| | Schneckenvorlaufgeschwindigkeit | 100 mm/s |
| | Einspritzzeit | 0,5 s |
| | mittlere Verweilzeit | 143 s |
| | Gesamtzyklus | 35,5 s |
| | (Nachdruckzeit 12 s, Kühlzeit 18 s, Pausenzeit 1 s) | |

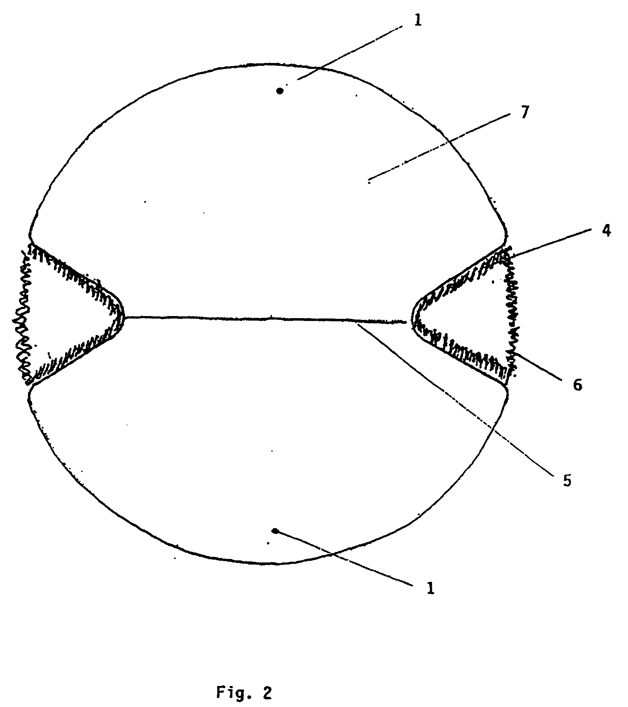

Zur Messung der beim Spritzgießen dieser ABS-Formmassen sind im Werkzeug bildenden Beläge wurde ein spezielles Werkzeug (Fig. 1) verwendet. In diesem Werkzeug wurden über zwei Anschnitte 1 (0,8 mm Durchmesser) eine Rundscheibe 7 ($\phi$ 118 mm; Dicke 2 mm) im Spritzgießverfahren entsprechend der angegebenen Verarbeitungsbedingungen hergestellt. Beim Einströmen der heißen Masse (240°C) in die kavität 2 bilden sich Beläge 4 der flüchtigen Bestandteile an den kreisförmigen Fließlinien, die sich in der Mitte der Kavität 2 treffen. Der Spritzgießvorgang wird nach der Berührung dieser Fließlinien so gestoppt, daß ein dreieckähnlicher Raum 6 für die Belagbeurteilung verbleibt (Figur 2). Dieser Vorgang entspricht 80 % des gesamten Dosierweges. Die Messung der Belagsmengen erfolgen in der Weise, daß die auswechselbare Begrenzungsscheibe 3 nach jeweils 350 Schüssen aus dem Werkzeug genommen und ihre Gewichtszunahme bestimmt wurde (Figur 2). Zusätzliche Gewichtskontrolle wurde durch die Abnahme des Belages mittels einer Rasierklinge durchgeführt.

Tabelle 1: Zusammensetzungen der Formmassen und resultierende Belagsbildung (Angaben in Gew.-Teile)

| Beispiel | A1 (SAN) | A2 (SAN) | AV (SAN) | B1 (Pfropfpolymer) | B2 (Pfropfpolymer) | C1 (Additiv) | C2 (Additiv) | C3 (Additiv) | Belags-menge (mg) |
|---|---|---|---|---|---|---|---|---|---|
| 1 | 70 | -- | -- | 15 | 15 | 3,5 | -- | -- | 6 |
| 2 | -- | 70 | -- | 15 | 15 | 3,5 | -- | -- | 8 |
| 3 (Vergleich) | -- | -- | 70 | 15 | 15 | 3,5 | -- | -- | 28 |
| 4 (Vergleich) | 70 | -- | -- | 15 | 15 | -- | 3,5 | -- | 16 |
| 5 (Vergleich) | 70 | -- | -- | 15 | 15 | 5 | -- | -- | 15 |
| 6 | 65 | -- | -- | 35 | -- | 3,3 | -- | 0,5 | 6 |
| 7 (Vergleich) | -- | -- | 65 | 35 | -- | 3,3 | -- | 0,5 | 31 |

EP 0 869 147 B1

**Patentansprüche**

1. Thermoplastische Formmassen vom ABS-Typ enthaltend

   A) 5 bis 95 Gew.-% mindestens eines thermoplastischen Homo-, Co- oder Terpolymerisats von Styrol, $\alpha$-Methylstyrol, Acrylnitril, N-substituiertem Maleinimid oder Mischungen daraus,

   B) 5 bis 95 Gew.-% mindestens eines Pfropfpolymerisats von

   B.1) 5 bis 90 Gew.-Teilen Styrol, $\alpha$-Methylstyrol, Acrylnitril, N-substituiertem Maleinimid oder Mischungen daraus auf

   B.2) 95 bis 10 Gew.-Teile eines Kautschuks mit einer Glasübergangstemperatur $\leq 0°C$

   und

   C) 1 bis 10 Gew.-Teile (pro 100 Gew.-Teile A + B) mindestens eines Additivs ausgewählt aus der Gruppe Gleitmittel, Antistatikum, Entformungsmittel oder Mischungen daraus,

   **dadurch gekennzeichnet, daß** die Komponente A) durch Masse-, Lösungs- oder Suspensionspolymerisation hergestellt wird und einen Oligomerengehalt $\leq 1$ Gew.-%, aufweist, Komponente B) durch Emulsionspolymerisation hergestellt wird, der Gesamtoligomerengehalt der Formmassen $\leq 0,8$ Gew.-% beträgt und das Verhältnis (Molekulargewicht des Additivs) : (Menge des Additivs in der Formmasse (in Gew.-% )) einen Wert von 150 nicht unterschreitet, wobei die Kautschuke im Pfropfpolymerisat in Form wenigstens partiell vernetzter Teilchen eines mittleren Teilchendurchmessers ($d_{50}$) von 0,05 bis 0,60 μm vorliegt.

2. Thermoplastische Formmassen vom ABS-Typ gemäß Anspruch 1 enthaltend

   A) 10 bis 90 Gew.-% mindestens eines thermoplastischen Homo-, Co-oder Terpolymerisats von Styrol, $\alpha$-Methylstyrol, Acrylnitril, N-substituiertem Maleinimid oder Mischungen daraus,

   B) 10 bis 90 Gew.-% mindestens eines Pfropfpolymerisats von

   B.1) 30 bis 80 Gew.-Teilen Styrol, $\alpha$-Methylstyrol, Acrylnitril, N-substituiertem Maleinimid oder Mischungen daraus auf

   B.2) 70 bis 20 Gew.-Teile eines Kautschuks mit einer Glasübergangstemperatur $\leq 0°C$

   und

   C) 2 bis 7,5 Gew.-Teile (pro 100 Gew.-Teile A + B) mindestens eines Additivs ausgewählt aus Gleitmittel, Antistatikum, Entformungsmittel oder Mischungen daraus,

   **dadurch gekennzeichnet, daß** die Komponente A) durch Masse-, Lösungs- oder Suspensionspolymerisation hergestellt wird und einen Oligomerengehalt $\leq 0,75$ Gew.-%, aufweist, Komponente B) durch Emulsionspolymerisation hergestellt wird, der Gesamtoligomerengehalt der Formmassen $\leq 0,7$ Gew.-% beträgt und das Verhältnis (Molekulargewicht des Additivs) : (Menge des Additivs in der Formmasse (in Gew.-% )) einen Wert von 200 nicht unterschreitet.

3. Thermoplastische Formmassen gemäß Ansprüchen 1 und 2, **dadurch gekennzeichnet**, das als Thermoplastharzkomponente A) Styrol/Acrylnitril-Copolymerisate und/oder $\alpha$-Methylstyrol/Acrylnitril-Copolymerisate eingesetzt werden.

4. Verwendung der thermoplastischen Formmassen gemäß Ansprüchen 1 bis 3 zur Herstellung von Formteilen durch Spritzgießen.

5. Verwendung der thermoplastischen Formmassen gemäß Anspruch 1 bis 4 zur Herstellung von Hochglanz-Formteilen.

**Claims**

1. Thermoplastic moulding composition of the ABS type, containing

   A) 5 to 95 % by weight of at least one thermoplastic homo-, co- or terpolymer of styrene, $\alpha$-methylsturene, acrylonitrile, N-substituted maleinimide or mixtures thereof,

   B) 5 to 95 % by weight of at least one graft polymer of

   B.1) 5 to 90 parts by weight of styrene, $\alpha$-methylsturene, acrylonitrile, N-substituted maleinimide or mixtures thereof, on

   B.2) 95 to 10 parts by weight of a rubber with a glass transition temperature $\leq 0°C$,

   and

   C) 1 to 10 parts by weight (per 100 parts by weight of A + B), of at least one additive selected from the group comprising lubricants, anti-static agents, demoulding agents or mixtures thereof,

   **characterised in that** component A) is produced by bulk, solution or suspension polymerisation and has an oligomer content $\leq 1$ % by weight, component B) is produced by emulsion polymerisation, the total oligomer content of the moulding compositions is $\leq 0.8$ % by weight, and the ratio of the molecular weight of the additive to the amount of additive in the moulding composition (in % by weight) does not fall below a value of 150, the rubber in the graft polymer being present in the form of at least partially cross-linked particles with a mean particle diameter ($d_{50}$) of 0.05 to 0.60 $\mu$m.

2. Thermoplastic moulding compositions of the ABS type according to claim 1, containing

   A) 10 to 90 % by weight of at least one thermoplastic homo-, co- or terpolymer of styrene, $\alpha$-methylsturene, acrylonitrile, N-substituted maleinimide or mixtures thereof,

   B) 10 to 90 % by weight of at least one graft polymer of

   B.1) 30 to 80 parts by weight of styrene, $\alpha$-methylsturene, acrylonitrile, N-substituted maleinimide or mixtures thereof, on

   B.2) 70 to 20 parts by weight of a rubber with a glass transition temperature $\leq 0°C$,

   and

   C) 2 to 7.5 parts by weight (per 100 parts by weight of A + B), of at least one additive selected from the group comprising lubricants, anti-static agents, demoulding agents or mixtures thereof,

   **characterised in that** component A) is produced by bulk, solution or suspension polymerisation and has an oligomer content $\leq 0.75$ % by weight, component B) is produced by emulsion polymerisation, the total oligomer content of the moulding compositions is $\leq 0.7$ % by weight, and the ratio of the molecular weight of the additive to the amount of additive in the moulding composition (in % by weight) does not fall below a value of 200.

3. Thermoplastic moulding compositions according to claims 1 or 2, **characterised in that** styrene/acrylonitrile co-polymers and/or $\alpha$-methylstyrene/acrylonitrile copolymers are used as thermoplastic resin component A).

4. Use of the thermoplastic moulding compositions according to claims 1 to 3 for the production of mouldings by injection moulding.

5. Use of the thermoplastic moulding compositions according to claims 1 to 4 for the production of high-gloss mouldings.

EP 0 869 147 B1

**Revendications**

1. Matières à mouler thermoplastiques de type ABS contenant

   A) 5 à 95 % en poids d'au moins un homopolymère, copolymère ou terpolymère thermoplastique du styrène, de l'$\alpha$-méthylstyrène, de l'acrylonitrile, de l'imide maléique substitué en position N ou de mélanges de ceux-ci,

   B) 5 à 95 % en poids d'au moins un polymère greffé de

      B.1) 5 à 90 parties en poids de styrène, d'$\alpha$-méthylstyrène, d'acrylonitrile, d'imide maléique substitué en position N ou de mélanges de ceux-ci sur

      B.2) 95 à 10 parties en poids d'un caoutchouc avec une température de transition vitreuse $\leq 0°C$

      et

   C) 1 à 10 parties en poids (par 100 parties en poids de A + B) d'au moins un additif sélectionné dans le groupe des agents lubrifiants, des agents antistatiques, des agents de démoulage ou de mélanges de ceux-ci,

   **caractérisées en ce que** le composant A) est fabriqué par polymérisation en masse, en solution ou en suspension et présente une teneur en oligomères $\leq$1 % en poids, le composant B) est synthétisé par polymérisation en émulsion et la teneur totale en oligomères des matières à mouler est $\leq$ 0,8 % en poids et le rapport (poids moléculaire de l'additif) : (quantité de l'additif dans la matière à mouler (en % en poids)) n'est pas inférieur à une valeur de 150, les caoutchoucs étant présents dans le polymère greffé sous la forme de particules au moins partiellement réticulées d'un diamètre de particule ($d_{50}$) moyen de 0,05 à 0,60 $\mu$m.

2. Matières à mouler thermoplastiques de type ABS suivant la revendication 1, contenant

   A) de 10 à 90 % en poids d'au moins un homopolymère, copolymère ou terpolymère thermoplastique du styrène, de l'$\alpha$-méthylstyrène, de l'acrylonitrile, de l'imide maléique substitué en position N ou de mélanges de ceux-ci,

   B) 10 à 90 % en poids d'au moins un polymère greffé de

      B.1) 30 à 80 parties en poids de styrène, d'$\alpha$-méthylstyrène, d'acrylonitrile, d'imide maléique substitué en position N ou de mélanges de ceux-ci sur
      B.2) 70 à 20 parties en poids d'un caoutchouc avec une température de transition vitreuse $\leq 0°C$

      et

   C) 2 à 7,5 parties en poids (par 100 parties en poids de A + B) d'au moins un additif sélectionné dans le groupe des agents lubrifiants, des agents antistatiques, des agents de démoulage ou de mélanges de ceux-ci,

   **caractérisées en ce que** le composant A) est fabriqué par polymérisation en masse, en solution ou en suspension et présente une teneur en oligomères $\leq$0,75 % en poids, le composant B) est synthétisé par polymérisation en émulsion et la teneur totale en oligomères des matières à mouler est $\leq$0,7 % en poids et le rapport (poids moléculaire de l'additif) : (quantité de l'additif dans la matière à mouler (en % en poids)) n'est pas inférieur à une valeur de 200.

3. Matières à mouler thermoplastiques suivant les revendications 1 et 2, **caractérisées en ce qu'**on utilise comme composant de résine thermoplastique A) des copolymères de styrène/acrylonitrile et/ou des copolymères d'$\alpha$-méthylstyrène/acrylonitrile.

4. Utilisation des matières à mouler thermoplastiques suivant les revendications 1 à 3 pour la fabrication de pièces moulées par moulage par injection.

5. Utilisation des matières à mouler thermoplastiques suivant les revendications 1 à 4 pour la fabrication de pièces moulées à grand brillant.

Fig. 1

Fig. 2